# FASCICULE DE BREVET EUROPEEN

(11) **EP 0 762 621 B1**
(45) Date de publication et mention de la délivrance du brevet: **26.05.1999**
(21) Numéro de dépôt: 96401677.8
(22) Date de dépôt: 26.07.1996
(51) Int. Cl.: H02M 3/335

(54) **Dispositif électrique à transformateur dont le primaire est alimenté sous contrôle d'un hacheur**
Elektrisches Gerät mit einem Transformator dessen Primärteil gepeist wird mittels Steuerung eines Schalters
Electrical device with a transformer who's primary is supplied under the control of a switch

(30) Priorité: 01.09.1995 FR 9510318
(43) Date de publication de la demande: 12.03.1997
(73) Titulaire: LACME, 92250 La Garenne Colombes (FR)
(72) Inventeur: Hamm, Valéry, 72200 La Fleche (FR); Mulet-Marquis, Yves, 49770 La Meignanne (FR)
(74) Mandataire: Laget, Jean-Loup

(56) Documents cités:
- EP-A- 0 404 191
- PATENT ABSTRACTS OF JAPAN vol. 007, no. 004 (E-151), 8 Janvier 1983 & JP-A-57 162966 (TOUHOKU KINZOKU KOGYO KK), 6 Octobre 1982,
- PATENT ABSTRACTS OF JAPAN vol. 015, no. 419 (E-1126), 24 Octobre 1991 & JP-A-03 173351 (IWATSU ELECTRIC CO LTD), 26 Juillet 1991,
- PATENT ABSTRACTS OF JAPAN vol. 017, no. 331 (E-1386), 23 Juin 1993 & JP-A-05 038070 (TAMURA SEISAKUSHO CO LTD), 12 Février 1993,

## Description

L'invention concerne un dispositif électrique à transformateur dont le primaire est alimenté sous contrôle d'un hacheur.

De tels dispositifs sont généralement utilisés dans les chargeurs de batterie, ou les chargeurs - démarreurs. Ils comportent un transformateur dont le primaire est alimenté par une tension continue, ou alternative redressée, et un secondaire qui délivre un courant par l'intermédiaire d'une diode. Le primaire du transformateur est de préférence placé sous le contrôle d'un transistor qui assure le hachage de la tension d'alimentation, à une fréquence élevée, de l'ordre de 40 kHz. Le transformateur fonctionne alors selon la technique de charge par accumulation dite "fly-back", dont le principe est connu de EP-A-404 191.

Dans le cas d'un chargeur de batterie ou d'un chargeur-démarreur, la tension d'alimentation du primaire est en général la tension du réseau, redressée, dont la valeur maximale est de l'ordre de 300 V. Au secondaire, la tension est de l'ordre de 12 à 15 V. Le nombre de spires au secondaire est donc beaucoup plus faible qu'au primaire, et l'inductance de fuite du primaire est en général relativement élevée.

Au cours du fonctionnement du transformateur selon la technique de charge par accumulation, l'énergie stockée dans l'inductance de fuite du primaire est dissipée soit dans le transistor de hachage, soit dans un composant tel qu'une diode écrêteuse montée par exemple en parallèle sur le transistor. Il en résulte soit une surtension, soit un échauffement anormal, susceptible de détériorer le transistor et d'en modifier les performances.

Un but de la présente invention est de proposer un dispositif électrique à transformateur ne présentant pas cet inconvénient et de plus utilisant une partie de cette énergie au lieu de la dissiper.

L'invention comme définie dans la revendication 1 a pour objet un dispositif électrique à transformateur dont le primaire est alimenté sous le contrôle d'un transistor fonctionnant en hacheur à haute fréquence, et dont le secondaire délivre une tension basse de forme continue sous contrôle d'une première diode, il comporte un circuit comportant un condensateur monté en parallèle sur le primaire du transformateur, et en ce que ledit circuit récupère une partie de l'énergie de l'inductance de fuite du primaire par l'intermédiaire du condensateur pour l'utiliser au secondaire du transformateur.

Selon les caractéristiques de l'invention :
- ledit circuit comporte en parallèle sur le primaire du transformateur, une deuxième diode et un condensateur ; et en parallèle sur ladite deuxième diode, une résistance, un second transistor et une troisième diode ; la deuxième diode assurant la charge du condensateur par le courant circulant dans le primaire après blocage dudit transistor ; la troisième diode, le second transistor et la résistance assurant la décharge du condensateur à travers le primaire du transformateur après annulation du courant dans ledit primaire.
- la résistance est déterminée pour que la décharge du condensateur dans le primaire du transformateur soit apériodique.
- le transformateur est alimenté en continu.
- le transformateur est alimenté en alternatif redressé à deux alternances.

L'invention a également pour objet l'application d'un dispositif électrique à transformateur défini ci-dessus à la réalisation :
- d'une alimentation stabilisée en courant continu,
- d'un chargeur de batterie pour véhicule automobile,
- d'un chargeur - démarreur pour véhicule automobile.

D'autres caractéristiques ressortent de la description qui suit faite avec référence au dessin annexé sur lequel :
- la figure 1 représente un schéma électrique d'un exemple de réalisation du dispositif électrique à transformateur dont le primaire est alimenté sous contrôle d'un hacheur, selon la présente invention ;
- la figure 2 représente les courants primaire et secondaire au cours d'une séquence de fonctionnement du transformateur.

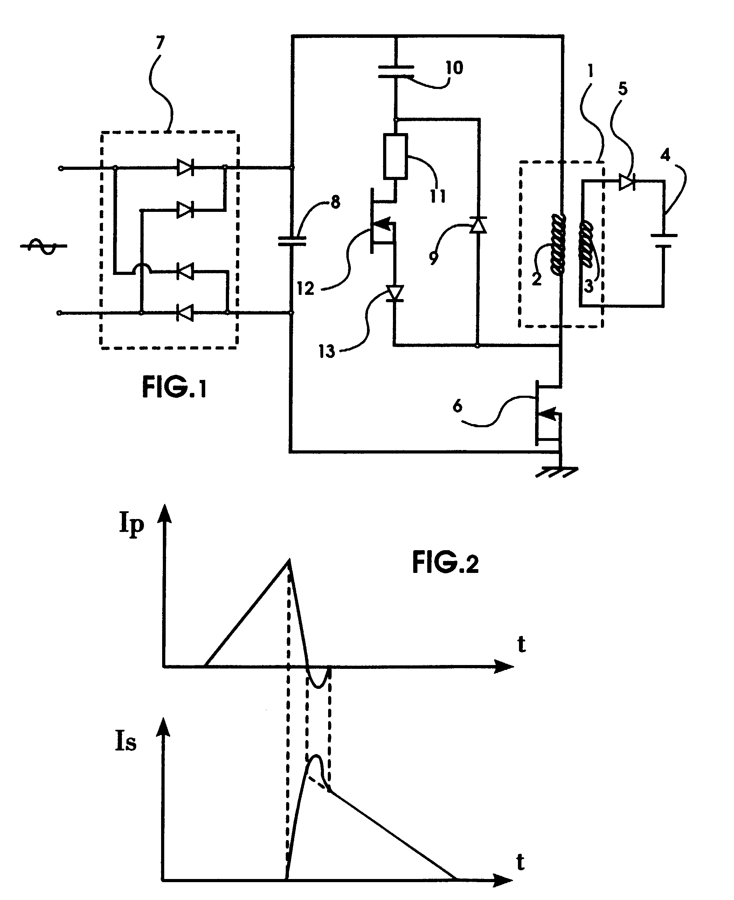

Sur la figure 1, le transformateur 1 comporte un primaire 2 et un secondaire 3 qui alimente la batterie à charger 4 par l'intermédiaire d'une diode 5. Le primaire 2 du transformateur 1 est contrôlé par un transistor 6. L'ensemble du primaire 2 et du transistor 6 est alimenté à partir du réseau (220 V, 50 Hz) par l'intermédiaire d'un pont redresseur 7 à deux alternances. A la sortie du pont redresseur 7, un condensateur 8 est prévu, non pas pour filtrer la basse fréquence du réseau et lisser la courbe de la tension redressée, mais pour filtrer la haute fréquence (de l'ordre de 40 KHz) de hachage imposée par le transistor 6 et éviter de renvoyer des perturbations électromagnétiques sur le réseau. Le fonctionnement du transformateur 1 est commandé par le transistor 6 qui assure le hachage de la tension d'alimentation du primaire 2, à une haute fréquence, de l'ordre de 40 KHz. Pendant la période de conduction du transistor 6, le courant dans le primaire 2 augmente linéairement. Pour une durée de conduction fixée du transistor 6, le courant atteint une valeur proportionnelle à la valeur instantanée de la tension d'alimentation du primaire 2. Cette phase correspond à la rampe montante de la courbe Ip(t) sur la Figure 2. Pendant la phase de conduction du transistor 6, aucun courant ne passe dans le secondaire 3 du fait du sens respectif des enroulements primaire et secondaire et de la présence de la diode 5.

Lorsque le transistor 6 se bloque, le courant dans le primaire s'annule rapidement selon la rampe descendante de la courbe Ip(t) sur la figure 2, et le courant dans le secondaire augmente rapidement selon la rampe montante de la courbe Is(t) sur la figure 2. Ensuite, le courant dans le secondaire diminue sensiblement linéairement selon la rampe descendante de la courbe Is(t) sur la figure 2, en suivant les pointillés puis le trait plein.

Pour récupérer une partie de l'énergie stockée dans l'inductance de fuite du primaire 2, l'invention prévoit le montage en parallèle sur le primaire 2 d'une deuxième diode 9 et d'un condensateur 10, et en parallèle sur la diode 9, d'une résistance 11, d'un second transistor 12 et d'une troisième diode 13.

La deuxième diode 9 conduit depuis le point commun au primaire 2 et au transistor 6 vers le condensateur 10, de telle sorte que lors du blocage du transistor 6, le courant dans le primaire 2 charge le condensateur 10.

La troisième diode 13 conduit pour autoriser la décharge du condensateur 10 à travers la résistance 11 sous le contrôle du deuxième transistor 12.

Le fonctionnement du dispositif est le suivant en partant d'une phase de conduction du transistor 6. A l'instant du blocage du transistor 6, le second transistor 12 devient conducteur. Le courant traversant le primaire 2, du fait de la présence de l'inductance de fuite, passe par la deuxième diode 9 et charge le condensateur 10. Au fur et à mesure que le courant dans le primaire 2 diminue, le condensateur 10 se charge et le courant dans le secondaire 3 augmente. La troisième diode 13 empêche le passage d'un courant dans le second transistor 12.

Lorsque le courant dans le primaire 2 s'annule, le condensateur 10 atteint sa tension maximale, de même que le transistor 6. La tension aux bornes du transistor 6 peut donc être contrôlée par l'intermédiaire de la valeur choisie pour la capacité du condensateur 10.

Le second transistor 12 étant conducteur, la troisième diode 13 permet la décharge du condensateur 10 à travers la résistance 11, le second transistor 12, la troisième diode 13 et le primaire 2. La valeur de la résistance 11 est définie pour que la décharge du condensateur 10 soit apériodique. Le courant de décharge du condensateur 10 apparaît sur la courbe Ip(t) de la figure 2 sous forme d'une impulsion négative. Une partie de l'énergie de l'inductance de fuite, qui avait été stockée dans le condensateur 10 est alors transférée au secondaire 3 du transformateur 1 au lieu d'être dissipée dans le transistor 6. Le courant dans le secondaire présente une impulsion, correspondant à celle du courant primaire, qui apparaît sur la courbe Is(t) de la figure 2 au-dessus de la ligne en pointillés.

Le dispositif selon l'invention permet de récupérer une partie de l'énergie de l'inductance de fuite du primaire et de l'utiliser au secondaire 3 du transformateur 1, pour la charge d'une batterie, ou pour une aide au démarrage d'un véhicule automobile, par exemple. Le dispositif selon l'invention peut également être appliqué à la réalisation d'une alimentation stabilisée en tension continue au secondaire du transformateur. Il peut être alimenté en continu ou en alternatif redressé à deux alternances.

## Revendications

1. Dispositif électrique à transformateur dont le primaire est alimenté sous le contrôle d'un transistor fonctionnant en hacheur à haute fréquence, et dont le secondaire délivre une tension basse de forme continue sous contrôle d'une première diode, un circuit comportant une deuxième diode (9) et un condensateur (10) étant monté en parallèle sur le primaire (2) du transformateur (1), récupèrant une partie de l'énergie de l'inductance de fuite du primaire (2) par l'intermédiaire du condensateur (10) pour l'utiliser au secondaire (3) du transformateur (1), caractérisé en ce que ledit circuit comporte :
- en parallèle sur ladite deuxième diode (9), une résistance (11), un second transistor (12) et une troisième diode (13),
- la deuxième diode (9) assurant la charge du condensateur (10) par le courant circulant dans le primaire (2) après blocage dudit transistor (6),
- la troisième diode (13), le second transistor (12) et la résistance (11) assurant la décharge du condensateur (10) à travers le primaire (2) du transformateur (1) après annulation du courant dans ledit primaire (2),
de sorte qu'une partie de l'énergie de l'inductance de fuite du primaire (2) soit récupérée par l'intermédiaire du condensateur (10) et utilisée au secondaire (3) du transformateur (1).

2. Dispositif selon la revendication 1 caractérisé en ce que la résistance (11) est déterminée pour que la décharge du condensateur (10) dans le primaire (2) du transformateur soit apériodique.

3. Dispositif selon la revendication 1 ou 2, caractérisé en ce que le transformateur (1) est alimenté en continu.

4. Dispositif selon la revendication 1 ou 2, caractérisé en ce que le transformateur (1) est alimenté en alternatif redressé à deux alternances.

5. Application du dispositif selon l'une quelconque des revendications 1 à 4 à la réalisation d'une alimentation stabilisée en courant continu.

6. Application du dispositif selon l'une quelconque des revendications 1 à 4 à la réalisation d'un chargeur de batterie pour véhicule automobile.

7. Application du dispositif selon l'une quelconque des revendications 1 à 4 à la réalisation d'un chargeur - démarreur pour véhicule automobile.

## Patentansprüche

1. Elektrisches Gerät mit einem Transformator, dessen Primärspule von einem als Hochfrequenz-Schalter betriebenen Transistor gesteuert versorgt wird, und dessen Sekundärspule von einer ersten Diode gesteuert eine niedrige Spannung in Form einer Gleichspannung abgibt, mit einer Schaltung, die eine zweite Diode (9) und einen Kondensator (10) aufweist, welche parallel zu der Primärspule (2) des Transformators (1) geschaltet sind, wobei die Schaltung einen Teil der Energie der Streuinduktivität der Primärspule (2) mittels des Kondensators (10) zurückgewinnt, um diese bei der Sekundärspule (3) des Transformators (1) zu verwenden,
**dadurch gekennzeichnet, daß** die Schaltung
- parallel zu der zweiten Diode (9) einen Widerstand (11), einen zweiten Transistor (12) und eine dritte Diode (13) aufweist, wobei
- die zweite Diode (9) das Laden des Kondensators (10) über den nach der Sperrung des Transistors (6) in der Primärspule (2) fließenden Strom sicherstellt,
- die dritte Diode (13), der zweite Transistor (12) und der Widerstand (11) das Entladen des Kondensators (10) über die Primärspule (2) des Transformators (1) nach dem Abklingen des Stroms in der Primärspule (2) sicherstellen,
so daß ein Teil der Energie der Streuinduktivität der Primärspule (2) mittels des Kondensators (10) zurückgewonnen wird und in der Sekundärspule (3) des Transformators (1) verwendet wird.

2. Gerät nach Anspruch 1, **dadurch gekennzeichnet, daß** der Widerstand (11) derart bestimmt ist, daß das Entladen des Kondensators (10) in die Primärspule (2) des Transformators nicht periodisch erfolgt.

3. Gerät nach Anspruch 1 oder 2, **dadurch gekennzeichnet, daß** der Transformator (1) von einer Gleichspannung gespeist ist.

4. Gerät nach Anspruch 1 oder 2, **dadurch gekennzeichnet, daß** der Transformator (1) durch eine Wechselspannung gespeist ist, die bei zwei Halbwellen gleichgerichtet ist.

5. Verwendung des Geräts nach einem der Ansprüche 1 bis 4 bei der Verwirklichung einer stabilisierten Gleichspannungsversorgung.

6. Verwendung des Geräts nach einem der Ansprüche 1 bis 4 bei der Verwirklichung einer Batterieladevorrichtung für ein Kraftfahrzeug.

7. Verwendung des Geräts nach einem der Ansprüche 1 bis 4 bei der Verwirklichung einer Starthilfe-Ladevorrichtung für ein Kraftfahrzeug.

## Claims

1. An electric transformer device, the primary of which is supplied under the control of a transistor functioning as a high-frequency chopper and the secondary of which supplies a low DC voltage under the control of a first diode, a circuit comprising a second diode (9) and a capacitor (10) being mounted in parallel on the primary (2) of the transformer (1) and recovering some of the energy from the leakage inductance of the primary (2) through the intermediary of the capacitor (10) for use in the secondary (3) of the transformer (1), characterised in that said circuit comprises:
- in parallel on said second diode (9), a resistor (11), a second transistor (12) and a third diode (13),
- the second diode (9) ensuring charging of the capacitor (lo) by the current circulating in the primary (2) after blocking of said transistor (6),
- the third diode (13), the second transistor (12) and the resistor (11) ensuring discharging of the capacitor (1) via the primary (2) of the transformer (1) after turn-off of the current in said primary (2),
in such a way that some of the energy from the leakage inductance of the primary (2) is recovered through the intermediary of the capacitor (10) and used by the secondary (3) of the transformer (1).

2. A device according to claim 1, characterised in that the resistor (11) is such that discharging of the capacitor (10) into the primary (2) of the transformer is aperiodic.

3. A device according to claim 1 or claim 2, characterised in that the transformer (1) is supplied with direct current.

4. A device according to claim 1 or claim 2, characterised in that the transformer (1) is supplied with alternating current rectified to two phases.

5. Use of the device according to any one of claims 1 to 4 to produce a stabilised direct current power supply.

6. Use of the device according to any one of claims 1 to 4 to produce a battery charger for an automobile.

7. Use of the device according to any one of the claims 1 to 4 to produce a charger/starter for an automobile.
